# EUROPÄISCHE PATENTANMELDUNG

(11) **EP 0 961 510 A2**
(43) Veröffentlichungstag der Anmeldung: **01.12.1999**
(21) Anmeldenummer: 99108780.0
(22) Anmeldetag: 03.05.1999
(51) Int. Cl.: H04Q 7/34

(54) **Anordnung zur Funktionsprüfung von Funkstationen eines Funk-Kommunikationssystems**

(30) Priorität: 26.05.1998 DE 19823523
(71) Anmelder: SIEMENS AKTIENGESELLSCHAFT, 80333 München (DE)
(72) Erfinder: Korte, Werner, 20020 Arese (MI) (IT); Schwab, Martin Dr., 82538 Geretsried (DE); Sokat, Jörg Dr., 81379 München (DE); Heinz, Helmut, 86949 Windach (DE)

(57) **Zusammenfassung**

Erfindungsgemäß weist die Anordnung zur Funktionsprüfung von Funkstationen eine in der Funkstation verwirklichte Sendeeinrichtung zum Übertragen zumindest eines Signals gemäß einem Teilnehmerseparierungsverfahren des Funk-Kommunikationssystems zu einer in der Funkstation verwirklichten Verstärkungseinrichtung zum Verstärken des Signals. Das verstärkte Signal wird einer Meßeinrichtung zum Bestimmen zumindest eines charakteristischen Wertes aus dem zugeführten verstärkten Signal zugeführt. Eine in der Funkstation verwirklichte Empfangseinrichtung empfängt den von der Meßeinrichtung gemäß dem Teilnehmerseparierungsverfahren des Funk-Kommunikationssystems übertragenen charakteristischen Wert, und eine Auswerteeinrichtung wertet den charakteristischen Wert hinsichtlich der Funktion der Funkstation aus.

## Beschreibung

Die Erfindung betrifft eine Anordnung zur Funktionsprüfung von Funkstationen eines Funk-Kommunikationssystems, insbesondere eines Mobilfunksystems oder Access-Network-Systems.

In Funk-Kommunikationssystemen werden Informationen wie beispielsweise Sprache, Bildinformationen oder andere Daten, mit Hilfe von elektromagnetischen Wellen über eine Funkschnittstelle zwischen einer sendenden und einer empfangenden Funkstation, wie beispielsweise einer Basisstation bzw. Mobilstation für den Fall eines Mobilfunksystems, übertragen. Das Ab-strahlen der elektromagnetischen Wellen erfolgt dabei mit Trägerfrequenzen, die in dem für das jeweilige System vorgesehenen Frequenzband liegen. Beim GSM-Mobilfunksystem (Global System for Mobile Communication) liegen die Trägerfrequenzen im Bereich von 900 MHz, 1800 MHz und 1900 MHz. Für zukünftige Mobilfunksysteme mit CDMA- und TD/CDMA- Übertragungsverfahren über die Funkschnittstelle, wie beispielsweise das UMTS (Universal Mobile Telecommunication System) oder andere Systeme der 3. Generation sind Trägerfrequenzen im Bereich von ca. 2000 MHz vorgesehen.

In der Funkstation werden die zu sendenden Signale in einer Sendeeinrichtungen erzeugt. Über Kabelverbindungen, Verstärkungseinrichtungen, Kombinationseinrichtungen etc. werden die Signale einer Antenneneinrichtung zugeführt, die letztlich die Signale über die Funkschnittstelle abstrahlt.

Anordnungen zur Überprüfung einer optimalen Funktionsweise von beispielsweise Basisstationen eines Mobilfunksystems nach dem Stand der Technik ermöglichen nur eine Überprüfung von einigen Komponenten in dem Sende- bzw. Empfangspfad der Basisstation. Gemäß diesem Stand der Technik ist beispielsweise eine Überprüfung der Funktion des Leistungsverstärkers und der Antenneneinrichtungen nicht möglich.

Der Erfindung liegt die Aufgabe zugrunde, eine Anordnung anzugeben, das eine verbesserte Funktionsprüfung von Funkstationen ermöglicht. Diese Aufgabe wird durch die Anordnung nach den Merkmalen des unabhängigen Patentanspruchs 1 gelöst. Weiterbildungen der Erfindung sind den Unteransprüchen zu entnehmen.

Erfindungsgemäß weist die Anordnung zur Funktionsprüfung von Funkstationen eines Funk-Kommunikationssystems nach dem unabhängigen Patentanspruch 1 eine in der Funkstation verwirklichte Sendeeinrichtung zum Übertragen zumindest eines Signals gemäß einem Teilnehmerseparierungsverfahren des Funk-Kommunikationssystems zu einer in der Funkstation verwirklichten Verstärkungseinrichtung zum Verstärken des Signals. Das verstärkte Signal wird einer Meßeinrichtung zum Bestimmen zumindest eines charakteristischen Wertes aus dem zugeführten verstärkten Signal zugeführt. Eine in der Funkstation verwirklichte Empfangseinrichtung empfängt den von der Meßeinrichtung gemäß dem Teilnehmerseparierungsverfahren des Funk-Kommunikationssystems übertragenen charakteristischen Wert, und eine Auswerteeinrichtung wertet den charakteristischen Wert hinsichtlich der Funktion der Funkstation aus.

Vorteilhaft bietet diese Anordnung die Möglichkeit, für den Übertragungspfad, d.h. sowohl für die Sendeeinrichtung als auch für die Verstärkungseinrichtung eine Funktionsprüfung durchführen zu können. Ein besonderer Vorteil der erfindungsgemäßen Ausgestaltung besteht darin, daß eine erfindungsgemäße Überprüfung während des normalen Betriebs der Funkstation vorgenommen werden kann, da die Übertragung des Signals und die Übertragung der bestimmten charakteristischen Werte jeweils gemäß dem Teilnehmerseparierungsverfahren, das in dem Funk-Kommunikationssystem verwendet wird, erfolgt. Das gesendete Signal kann demnach beispielsweise einem normalen Datensignal, das in einem zugewiesenen Übertragungskanal übertragen wird, entsprechen. Eine spezielle Generierung beispielsweise eines Testsignal entfällt vorteilhaft.

Gemäß einer ersten Weiterbildung der Erfindung wird die Übertragung des Signals von der in einer Wartungs- und Administrationseinrichtung des Funk-Kommunikationssystems angeordneten Auswerteeinrichtung initiiert. Diese Ausgestaltung besitzt den Vorteil, daß gegebenenfalls nur geringfügige Veränderungen bzw. Ergänzungen in der Funkstation vorgenommen werden müssen, und daß eine zentrale Steuerung der Funktionsprüfung aller mit der Wartungs- und Admininstrationseinrichtung verbundenen Funkstationen ermöglicht wird, wodurch vorteilhaft beispielsweise bei einer Detektion einer Funktionsstörung ein Ausgleich der Funkversorgung gesteuert werden kann.

Alternativ kann gemäß weiteren Weiterbildungen das Signal aus einem Ausgangssignal der Verstärkungseinrichtung ausgekoppelt und der Meßeinrichtung zugeführt werden oder das Signal aus einer Antennenzuleitung zwischen einer Kombinationseinrichtung und zumindest einer Antenneneinrichtung der Funkstation ausgekoppelt und der Meßeinrichtung zugeführt werden. Die Kombinationseinrichtung der zweitgenannten Weiterbildung dient zur Verbindung der Aus- bzw. Eingänge der Sende- und zumindest einer Empfangseinrichtung der Funkstation mit der Antenneneinrichtung.

Gemäß der ersten alternativen Ausgestaltung wird direkt das Ausgangssignal der Verstärkungseinrichtung der Meßeinrichtung zugeführt, die anschließend die ermittelten charakteristischen Werte zu einer Empfangseinrichtung sendet. Hierbei kann für den Fall, daß die Funkstation mehrere Sende- und Empfangseinrichtungen aufweist, für jeden Sende- und Empfangspfad eine Verbindung zu der Meßeinrichtung hergestellt, so daß beispielsweise in die Meßeinrichtung einen zu dem Sendepfad korrespondierenden Empfangspfad auswählt, um somit gemäß dem Teilnehmerseparierungsverfahren die Übertragung der charakteristischen Werte durchzuführen.

Gemäß der zweiten alternativen Ausgestaltung wird das Signal aus der Antennenzuleitung ausgekoppelt. Dieses bietet den Vorteil, daß bei Funkstationen, die mehrere Sende- und Empfangseinrichtungen aufweisen, nur eine Verbindung zu der Meßeinrichtung für jede Antennenzuleitung aufweisen muß, wodurch vorteilhaft die Komplexität der Prüfung verringert wird. Aus der Antennenzuleitung wird das Signal einer Sendeeinrichtung bzw. Verstärkungseinrichtung ausgekoppelt und die ermittelten charakteristischen Werte gemäß dem Teilnehmerseparierungsverfahren eingekoppelt und somit einer Empfangseinrichtung zugeführt.

Gemäß einer Weiterbildung der zweiten alternativen Ausgestaltung ist der Meßeinrichtung ein Dämpfungsglied zur Dämpfung des verstärkten Signals und/oder zur Simulation von realen Übertragungsverhältnissen auf einer Funkschnittstelle vorgeschaltet. Diese Ausgestaltung ermöglicht vorteilhaft, daß als Meßeinrichtung beispielsweise Komponenten einer Mobilstation eines Mobilfunksystems verwendet werden, die jedoch auf niedrigere Sendeleistungen bzw. Signalstärken ausgelegt sind und deshalb eine Dämpfung benötigen. Die jeweilige Dämpfung des Dämpfungsgliedes kann bei der Ermittlung der charakteristischen Werte als Konstante berücksichtigt werden.

Eine weitere Alternative zur Anordnung der Meßeinrichtung ist einer weiteren Weiterbildung der Erfindung zu entnehmen. Dabei ist die Meßeinrichtung als eine mobile Funkstation ausgestaltet, die das über eine Funkschnittstelle übertragene Signal empfängt und den bestimmten charakteristischen Wert über die Funkschnittstelle zu der Funkstation überträgt. Diese Ausgestaltung besitzt den Vorteil, daß die Meßeinrichtung nicht in jeder Funkstation des Funk-Kommunikationssystems vorhanden sein muß, sondern bei Bedarf zur Ermittlung der charakteristischen Werte verwendet wird. Die Meßeinrichtung kann weiterhin vorteilhaft frei bewegt werden, so daß sie beispielsweise sowohl in unmittelbarer Nähe der Antenneneinrichtung der Funkstation als auch in gewissen Entfernungen angeordnet werden kann.

Die Meßeinrichtung kann gemäß einer weiteren Weiterbildung für jede der angeführten Alternativen eine Kennung einer Funkstation aufweisen. Durch diese Kennung wird die Meßeinrichtung wie eine normale Funkstation, mit der die zu überprüfende Funkstation eine Funkverbindung aufbaut, behandelt. Hiedurch wird die Implementierung der Überprüfung der Funktion der Funkstation unter Verwendung des normalen Teilnehmerseparierungsverfahrens erleichtert. So kann beispielsweise von der Wartungs- und Administrationseinrichtung ein Verbindungsaufbau zum Zweck der Funktionsprüfung zwischen der zu überprüfenden Funkstation und der Meßeinrichtung gemäß dem normalen Verfahren der Funk-Kommunikationssystems initiiert werden, wobei das Signal in der aufgebauten Verbindung übertragen wird und die Meßeinrichtung die ermittelten charakteristischen Werte zu der Funkstation sendet. Das Signal und/oder die bestimmten charakteristischen Werte können dabei entsprechend einer weiteren Ausgestaltung der Erfindung über eine Datenverbindung übertragen werden.

Gemäß einer weiteren vorteilhaften Weiterbildung der Erfindung wird von der Meßeinrichtung zusätzlich das Frequenzband und/oder der Übertragungskanal, in denen das Signal übertragen wird, ermittelt. Auch diese Angaben werden abhängig von der jeweiligen Ausgestaltung der Meßeinrichtung entweder zu der Empfangseinrichtung gesendet oder aber über die Funkschnittstelle zu der Funkstation übertragen. Durch diese Ausgestaltung kann die Auswertung in der Auswerteeinrichtung vereinfacht werden, da die ermittelten charakteristischen Werte direkt bestimmten Übertragungskanälen bzw. Frequenzbändern und somit bestimmten Sende- bzw. Verstärkungseinrichtungen und Empfangseinrichtungen einer Funkstation zugeordnet werden. In der Auswerteeinrichtung kann dabei gemäß einer weiteren Ausgestaltung der Erfindung eine Funktion der Verstärkungseinrichtung und/oder der Sendeeinrichtung überprüft werden.

Gemäß weiteren Weiterbildungen der Erfindung kann in der Wartungs- und Administrationseinrichtung eine Auswahl der zu überprüfenden Sendeeinrichtung und/oder Verstärkungseinrichtung vorgenommen werden, wodurch beispielsweise jeweils ein wenig ausgelasteter Sendepfad überprüft wird und es somit voreilhaft zu keiner Einschränkung der Übertragungskapazität in dem Funkversorgungsbereich der Funkstation kommt. Die Auswahl der Sendeeinrichtung und/oder Verstärkungseinrichtung kann einer weiteren Ausgestaltung zufolge auch aufgrund einer Zufallsauswahl vorgenommen werden, wobei die Überprüfung in bestimmten zeitlichen Abständen vorgenommen wird. Parallel zu der Auswahl eines Sendepfades kann gleichsam eine Auswahl einer Empfangseinrichtung bzw. eines Empfangspfades vorgenommen werden, um vorteilhaft Funktionsstörungen der Empfangseinrichtungen überprüfen zu können. Die Auswahl kann dabei beispielsweise gemäß einem aus dem FDD-Verfahren (FDD - Frequency Division Duplex), wie es unter anderem in dem GSM-Mobilfunksystem verwendet wird, bekannten Verfahren durchgeführt werden, bei dem zu jedem Übertragungskanal in Abwärtsrichtung ein komplementärer Übertragungskanal in einem anderen Frequenzband existiert. Die Funktionalität des erfindungsgemäßen Verfahrens ist dabei nicht von beispielsweise Frequenzsprungverfahren abhängig, da diese gemäß dem normalen Verhalten einer Mobilstation nachgebildet werden können, ohne die Durchführungsweise der Verfahrens zu beeinflussen.

Sollte der Fall auftreten, daß die Meßeinrichtung eine Fehlfunktion aufweist, so wird gemäß einer weiteren Weiterbildung eine Alarmmeldung zu der Auswerteeinrichtung übertragen, dort ausgewertet und beispielsweise die Überprüfung der Sende- bzw. Verstärkungseinrichtung beendet.

Das Verfahren läßt sich vorteilhaft sowohl in Funk-Kommunikationssystemen mit TDMA-, CDMA- als auch mit TD/CDMA- Teilnehmerseparierungsverfahren eingesetzt werden.

Das erfindungsgemäße Verfahren wird nun anhand von zeichnerischen Darstellungen näher erläutert. Dabei zeigen
- FIG 1: ein Blockschaltbild eines Funk-Kommunikationssystems, insbesondere eines Mobilfunksystems,
- FIG 2: eine schematische Darstellung der Rahmenstruktur der Funkschnittstelle gemäß einem TDMA-Teilnehmerseparierungsverfahren,
- FIG 3: eine schematische Darstellung der Rahmenstruktur der Funkschnittstelle gemäß einem TD/CDMA-Teilnehmerseparierungsverfahren,
- FIG 4: ein Blockschaltbild einer Funkstation, die als eine Basisstation eines Mobilfunksystems ausgestaltet ist und Einrichtungen zur Durchführung des erfindungsgemäßen Verfahrens aufweist, und
- FIG 5: ein Blockschaltbild einer Funkstation, die als eine Basisstation eines Mobilfunksystems ausgestaltet ist, und einer Meßeinrichtung, die als eine Mobilstation eines Mobilfunksystems ausgestaltet ist.

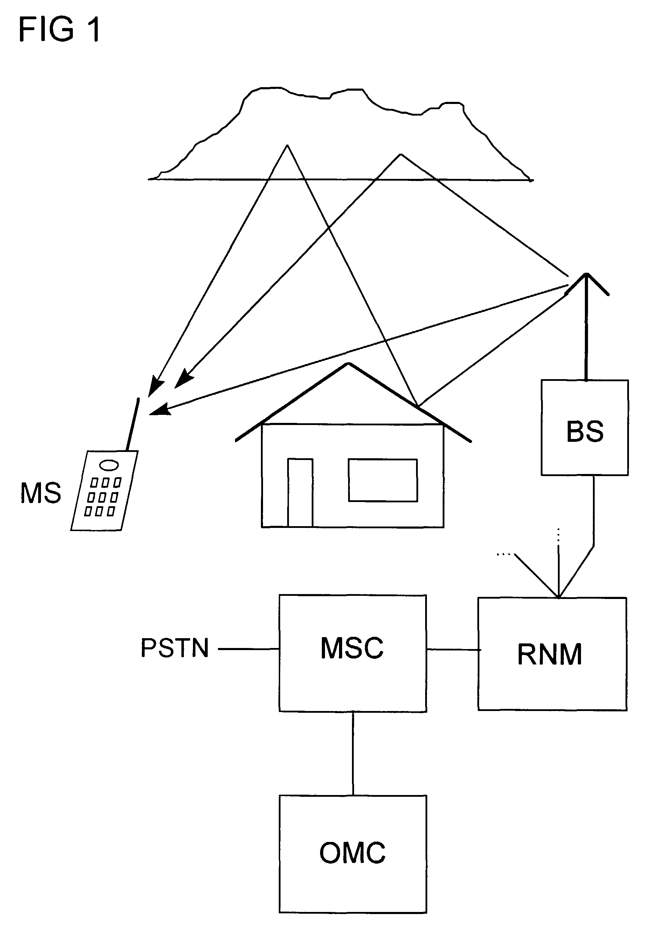

Das in FIG 1 dargestellte und als ein Mobiltunksystem ausgeführte Funk-Kommunikationssystem besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einer Einrichtung RNM zum Zuteilen von funktechnischen Ressourcen verbunden. Jede dieser Einrichtungen RNM ermöglicht wiederum eine Verbindung zu zumindest einer Basisstation BS. Eine solche Basisstation BS ist eine Funkstation, die über eine Funkschnittstelle Verbindungen zu weiteren Funkstationen, wie beispielsweise Mobilstationen MS oder stationären Endgeräten, aufbauen kann. Durch jede Basisstation BS wird zumindest eine Funkzelle gebildet, in dessen Bereich befindliche Funkstationen mit funktechnischen Ressourcen versorgt werden. Bei einer Sektorisierung oder bei hierarchischen Zellstrukturen können pro Basisstation BS auch mehrere Funkzellen versorgt werden. Mit der Mobilvermittlungsstelle MSC ist weiterhin eine Wartungs- und Administrationseinrichtung OMC zum Betrieb und zur Verwaltung des Mobilfunksystems verbunden, wobei ebenso eine Vebindung mit der Einrichtung RNM zum Zuteilen von funktechnischen Ressourcen möglich ist.

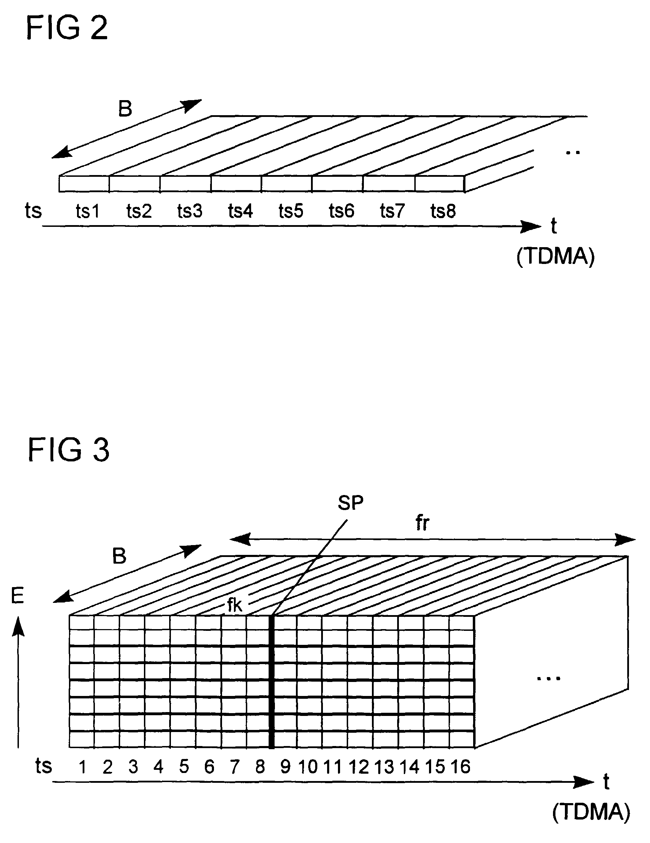

Eine erste Rahmenstruktur der Funkschnittstelle, wie sie beispielsweise aus dem GSM-Mobilfunksystem verwendet wird, ist aus FIG 2 ersichtlich. Gemäß einer TDMA-Komponente ist eine Aufteilung eines breitbandigen Frequenzbands, beispielsweise der Bandbreite B = 1,6 MHz, in mehrere Zeitschlitze ts, beispielsweise 8 Zeitschlitze ts1 bis ts8 vorgesehen. Jeder Zeitschlitz ts innerhalb des Frequenzbands B bildet einen Frequenzkanal. Innerhalb der Frequenzkanäle, die zur Nutzdatenübertragung vorgesehen sind, werden Informationen mehrerer Verbindungen in Funkblöcken übertragen. Gemäß einer FDMA (Frequency Division Multiple Access)-Komponente sind dem Funkkommunikationssystem mehrere Frequenzbänder B zugeordnet, wobei ebenfalls eine Trennung der der Frequenzbereiche B für die Auf- und Abwärtsrichtung vorgesehen ist.

Eine zweite Rahmenstruktur der Funkschnittstelle, wie sie in dem Mobilfunksystem der 3. Generation UMTS verwirklicht wird, ist aus der FIG 3 ersichtlich. Gemäß einer TDMA-Komponente ist eine Aufteilung eines breitbandigen Frequenzbereiches, beispielsweise der Bandbreite B = 5 MHz, in mehrere Zeitschlitze ts, beispielsweise 16 Zeitschlitze ts1 bis ts16, vorgesehen. Jeder Zeitschlitz ts innerhalb des Frequenzbandes B bildet einen Frequenzkanal fk. Innerhalb des Frequenzbandes B werden die aufeinanderfolgenden Zeitschlitze ts nach einer Rahmenstruktur gegliedert. So werden beispielsweise 16 Zeitschlitze ts1 bis ts16 zu einem Rahmen fr zusammengefaßt.

Bei einer Nutzung eines TDD-Übertragungsverfahrens wird ein Teil der Zeitschlitze ts1 bis ts16 für die Signalübertragung in Aufwärtsrichtung und ein Teil der Zeitschlitze ts1 bis ts16 in Abwärtsrichtung verwendet, wobei die Übertragung in Aufwärtsrichtung beispielsweise zeitlich gesehen vor der Übertragung in Abwärtsrichtung erfolgt. Dazwischen liegt ein Umschaltzeitpunkt SP, durch den die Anzahl der Zeitschlitze, die für die Übertragung in Aufwärtsrichtung genutzt werden und die Anzahl der Zeitschlitze für die Abwärtsrichtung flexibel eingestellt werden kann. Ein Frequenzkanal fk für die Aufwärtsrichtung entspricht in diesem Fall dem Frequenzkanal fk für die Abwärtsrichtung. In gleicher Weise sind die übrigen Frequenzkanäle fk strukturiert.

Innerhalb der Frequenzkanäle fk, die zur Nutzdatenübertragung vorgesehen sind, werden Informationen mehrerer Kommunikationsverbindungen in Funkblöcken übertragen. Diese Funkblöcke zur Nutzdatenübertragung bestehen aus Abschnitten mit Daten, in denen jeweils Abschnitte mit empfangsseitig bekannten Trainingssequenzen eingebettet sind. Die Daten sind verbindungsindividuell mit einer Feinstruktur, einem Spreizkode (CDMA-Kode), gespreizt, so daß empfangsseitig beispielsweise n Verbindungen durch diese CDMA-Komponente separierbar sind.

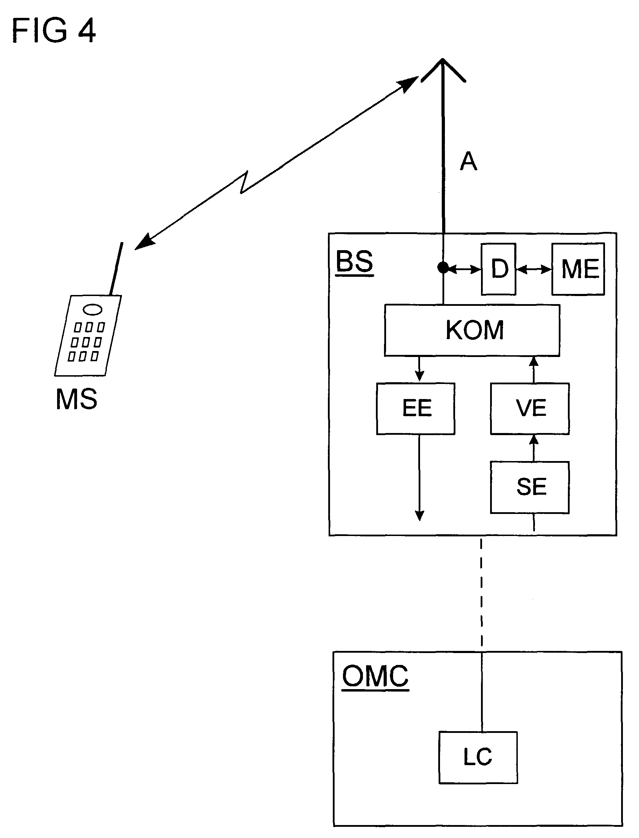

In der FIG 4 ist beispielhaft eine Funkstation BS angegeben, die als eine Basisstation BS eines Mobilfunksystems ausgestaltet ist. Zwischen der Funkstation BS und einer beispielhaft angegebenen Mobilstation MS besteht eine Funkverbindung zur Signalübertragung. Die Funkstation BS ist mit einer Antenneneinrichtungen A und einer Sende- SE und Empfangseinrichtung EE ausgestattet, über die sie Nutz- und Signalisierungsinformationen senden und empfangen kann. Die zu sendenden Signale werden in einer der Sendeeinrichtung SE nachgeschalteten Verstärkungseinrichtung VE verstärkt. Eine Kombinationseinrichtung KOM führt eine Kombination bzw. Trennung der gesendeten und empfangenen Signale durch, die über die gemeinsame Antenneneinrichtung A übertragen werden. Eine derartige Kombinationseinrichtung KOM wird eingesetzt, um in Funkstationen BS, die mehrere Sende- und Empfangseinrichtungen EE aufweisen, eine Zusammenführung der Signale auf eine Antenneneinrichtung A zu ermöglichen. Dieses ist der Fall, wenn von der Funkstation BS mehrere Frequenzbänder B für die Signalübertragung zur Verfügung gestellt werden, da die Sende- SE und Empfangseinrichtungen EE jeweils nur für ein Frequenzband B ausgelegt sind. In gleicher Weise sind die Verstärkungseinrichtungen VE nur jeweils für Signale in dem jeweiligen Frequenzband B in ihrem Verstärkungsverhalten dimensioniert bzw. optimiert.

In der Funkstation BS ist zusätzlich eine Meßeinrichtung ME verwirklicht, die von der Sendeeinrichtung SE gesendete und aus der Antennenzuleitung auskoppelte Signale empfangen und aus diesen charakteristische Werte bestimmen kann. Derartige charakteristische Werte, die sich gegebenenfalls erst nach internen Umrechnungen in der Meßeinrichtung ME ergeben, sind beispielsweise der Empfangspegel RXLEV oder eine skalierte Größe zur Bitfehlerrate RXQUAL. Die charakteristischen Werte RXLEV, RXQUAL können wie aus dem GSM-Mobilfunksystem bekannt beispielsweise von Komponenten einer Mobilstation ermittelt werden. Dieses ermöglicht eine einfache und kostengünsige Implementierung der Meßeinrichtung ME, die bekannte Komponenten einer Mobilstation verwenden kann, in Funkstationen BS. Die ausgekoppelten Signale können zusätzlich durch ein Dämpfungsglied D gedämpft werden, um eine Überlastung der Komponenten zur Ermittlung der charakteristischen Werte RXLEV, RXQUAL in der Meßeinrichtung ME zu vermeiden.

Die Funkstation BS ist, wie durch die gestrichelte Linie angedeutet wird, über weitere Komponenten des Mobilfunksystems mit einer bereits beschriebenen Wartungs- und Administrationseinrichtung OMC verbunden. Diese Einrichtung OMC weist erfindungsgemäß eine zusätzliche Auswerteeinrichtung LC auf. Eine derartige Auswerteeinrichtung LC kann beispielsweise ein in die Wartungs- und Administrationseinrichtung OMC integrierter Rechner sein, der eine programmgesteuerte Überprüfung der einzelnen Sendepfade der Funkstation BS durchführen kann. Die Auswerteeinrichtung LC ist in der Lage, einen Verbindungsaufbau gemäß dem verwendeten Teilnehmerseparierungsverfahren zu der Meßeinrichtung ME in der Funkstation BS anzuregen. In Abhängigkeit von dem von der Auswerteeinrichtung LC ausgewählten Übertragungskanal wird die jeweils vorgesehene Sendeeinrichtung SE der Funkstation BS bestimmt und auf dem aufgebauten Übertragungskanal zumindest ein Signal zu der Meßeinrichtung ME gesendet, wobei das Signal in der jeweiligen Verstärkungseinrichtung VE verstärkt und zu der Antenneneinrichtung A übertragen wird. Der Typ und der Inhalt des gesendeten Signals ist dabei unerheblich.

Noch bevor das gesendete Signal über die Antenneneinrichtung A und somit über die Funkschnittstelle übertragen wird, wird es aus der Antennenzuleitung ausgekoppelt und der Meßeinrichtung ME zugeführt. Die Meßeinrichtung ME ermittelt aus dem empfangenen Signal charakteristische Werte RXLEV, RXQUAL und sendet diese Werte über die entsprechende Empfangseinrichtung EE zu der Auswerteeinrichtung LC in der Wartungs- und Administrationeinrichtung OMC. Die Auswerteeinrichtung LC wertet die übertragenen charakteristischen Werte RXLEV, RXQUAL aus und kann hierdurch einen eventuellen Funktionsfehler der Sende- SE bzw. Verstärkungseinrichtung VE ermitteln und beispielsweise einen durch einen Funktionsfehler gestörten Sendepfad abschalten.

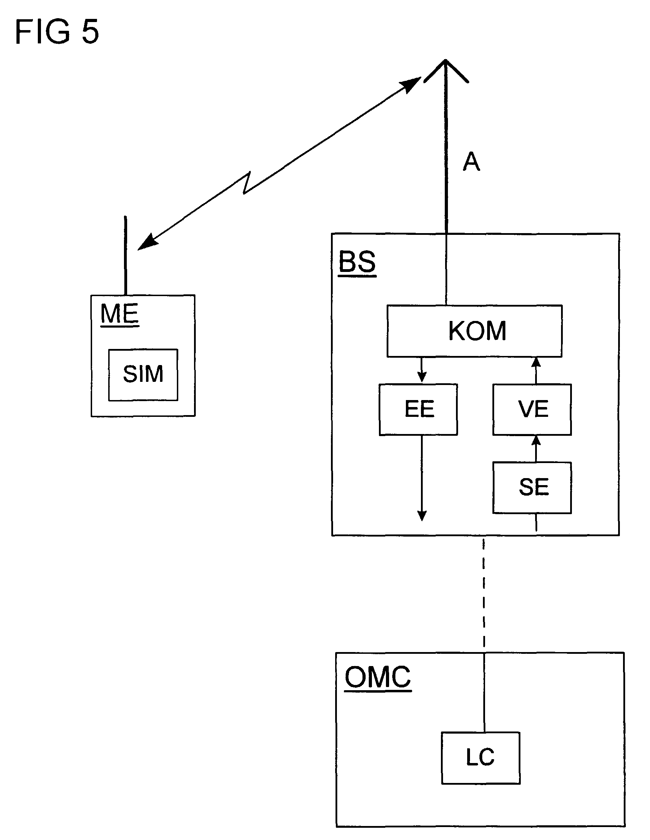

Die FIG 5 basiert auf der FIG 4, wobei die Meßeinrichtung ME als eine Mobilstation ausgestaltet ist. Die Mobilstation verhält sich durch eine Kennung SIM, wie sie aus dem Stand der Technik gemäß dem GSM-Mobilfunksystem bekannt ist, gegenüber der Funkstation BS wie eine normale Mobilstation MS, zu der eine Funkverbindung aufgebaut werden kann. Der Vorteil dieser Ausgestaltung besteht darin, daß keinerlei Veränderungen in der Funkstation BS vorgenommen werden müssen, um eine Funktionsprüfung der Sende- SE bzw. Verstärkungseinrichtungen VE der Funkstation BS durchzuführen. Von der Auswerteeinrichtung LC initiert wird eine Funkverbindung zu der Meßeinrichtung ME aufgebaut, wobei die Auswahl der jeweiligen Sende- SE und Empfangseinrichtung EE beispielsweise von der Auswerteeinrichtung LC gesteuert wird. Aus einem in dem aufgebauten Übertragungskanal übertragenen Signal werden in der Meßeinrichtung ME charakteristische Werte RXLEV, RXQUAL ermittelt. Vorteilhaft ist die Antenneneinrichtung der Meßeinrichtung ME nahe der Antenneneinrichtung A der Funkstation BS angeordnet, um eine Beeinflussung durch Umwelteinflüsse, wie sie bei der normalen Übertragung über die Funkschnittstelle entstehen, zu vermeiden. Die von der Meßeinrichtung ME ermittelten charakteristischen Werte werden in Form einer Datenübertragung zu der Funkstation BS gesendet und in der Auswerteeinrichtung LC ausgewertet.

Denkbar ist weiterhin, daß die Meßeinrichtung ME die ermittelten charakteristischen Werte RXLEV, RXQUAL speichert und zu der Empfangseinrichtung EE variierende Werte sendet, wodurch die Verstärkungseinrichtung VE zu einer Variation der Verstärkung in einer großen Breite veranlaßt werden kann. Aus den jeweils ermittelten charakteristischen Werten kann in der Meßeinrichtung ME beispielsweise jeweils ein Mittelwert gebildet und zu der Auswerteeinrichtung LC übertragen werden.

Die Auswahl des jeweils zu überprüfenden Sendepfads kann durch eine Zufallsauswahl, direkt gesteuert oder abhängig von der Verkehrsbelastung auf der Funkschnittstelle vorgenommen werden. Die Überprüfung wird beispielsweise solange durchgeführt, bis alle Sendepfade der Funkstation BS bezüglich ihrer Funktionsweise überprüft sind. Verfügt die Funkstation BS beispielsweise über ein Antenneneinrichtung A, die jeweils Sektoren der versorgten Funkzelle ausleuchtet, so wird beispielsweise für jeden Sektor eine separate Ermittlung der charakteristischen Werte RXLEV, RXQUAL vorgenommen. Optional können zur Verbesserung der Meßergebnisse die Sendepfade der jeweils nicht zu überprüfenden Sektoren stummgeschaltet werden.

Die Meßeinrichtung ME kann als eine einfache Mobilstation ausgestaltet sein, da nach dem Stand der Technik bereits jede Mobilstation unter anderem die genannten charakteristischen Werte RXLEV, RXQUAL ermittelt. Zusätzlich kann zur Vereinfachung der Auswertung der Meßergebnisse in der Meßeinrichtung ME vorgesehen sein, daß gleichsam das Frequenzband und/oder der Übertragungskanal ermittelt und zu der Auswerteeinrichtung LC übertragen wird. Dieses ist besonders für den Fall vorteilhaft, bei dem die Auswerteeinrichtung LC keinen Einfluß auf die Auswahl des jeweiligen Übertragungskanals besitzt. Durch die Information bezüglich des Frequenzbands und/oder des Übertragungskanals kann die Auswerteeinrichtung LC solange Verbindungen zu der Meßeinrichtung ME aufbauen, bis alle Sendepfade der Funkstation BS überprüft sind.

Die Auswerteeinrichtung LC kann beispielsweise auch als eine gesonderte Komponente in dem Funk-Kommunikationssystem verwirklicht sein, die beispielsweise über ein Analogmodem oder eine ISDN-Schnittstelle zur Datenübertragung mit dem Festnetz PSTN verbunden ist und die Überprüfungsprozedur steuert. Der Verbindungsaufbau zu der Meßeinrichtung ME erfolgt dabei in gleicher Weise wie zu einer normalen Mobilstation des Mobilfunksystems, die sich in dem Funkversorgungsbereich der Funkstation BS befindet.

Sollte es zu einer Fehlfunktion der Meßeinrichtung ME kommen, so wird ein Alarmsignal von dieser zu der Auswerteeinrichtung LC gesendet, die einen Abbruch der weiteren Überprüfung der Sendepfade der Funkstation BS auslöst.

## Patentansprüche

1. Anordnung zur Funktionsprüfung von Funkstationen (BS) eines Funk-Kommunikationssystems, mit
- einer in der Funkstation (BS) verwirklichten Sendeeinrichtung (SE) zum Übertragen zumindest eines Signals gemäß einem Teilnehmerseparierungsverfahren des Funk-Kommunikationssystems zu einer in der Funkstation (BS) verwirklichten Verstärkungseinrichtung (VE) zum Verstärken des Signals,
- einer Meßeinrichtung (ME) zum Bestimmen zumindest eines charakteristischen Wertes (RXLEV, RXQUAL) aus dem zugeführten verstärkten Signal,
- einer in der Funkstation (BS) verwirklichten Empfangseinrichtung (EE) zum Empfangen des von der Meßeinrichtung (ME) gemäß dem Teilnehmerseparierungsverfahren des Funk-Kommunikationssystems übertragenen charakteristischen Wertes (RXLEV, RXQUAL), und
- einer Auswerteeinrichtung (LC) zum Auswerten des charakteristischen Wertes (RXLEV, RXQUAL) hinsichtlich der Funktion der Funkstation (BS).

2. Anordnung nach Anspruch 1, bei der
die Auswerteeinrichtung (LC) in einer Wartungs- und Administrationseinrichtung (OMC) des Funk-Kommunikationssystems verwirklicht ist, und die Auswerteeinrichtung (LC) die Übertragung des Signals initiiert.

3. Anordnung nach Anspruch 1 oder 2, mit
Mitteln zum Auskoppeln des Signals aus einem Ausgangssignal der Verstärkungseinrichtung (VE) und zum Zuführen des Signals zu der (in der Funkstation (BS) verwirklichten) Meßeinrichtung (ME).

4. Anordnung nach Anspruch 1 oder 2, mit
Mitteln zum Auskoppeln des Signals aus einer Antennenzuleitung zwischen einer Kombinationseinrichtung (KOM) und zumindest einer Antenneneinrichtung (A) der Funkstation (BS) und zum Zuführen des Signals zu der Meßeinrichtung (ME), wobei die Kombinationseinrichtung (KOM) Aus- bzw. Eingänge der Sendeeinrichtung (SE) und der Empfangseinrichtung (EE) der Funkstation (BS) mit der Antenneneinrichtung (A) verbindet.

5. Anordnung nach dem vorhergehenden Anspruch, mit
einem der Meßeinrichtung (ME) vorgeschalteten Dämpfungsglied (D) zum Dämpfen des verstärkten Signals und/oder zum Simulieren von realen Übertragungsverhältnissen einer Funkschnittstelle.

6. Anordnung nach Anspruch 1 oder 2, bei der
die Meßeinrichtung (ME) als eine mobile Funkstation ausgestaltet ist, die das über die Funkschnittstelle übertragene Signal empfängt und anschließend den bestimmten charakteristischen Wert (RXLEV, RXQUAL) über die Funkschnittstelle zu der Funkstation (BS) überträgt.

7. Anordnung nach einem vorhergehenden Anspruch, bei der
das Signal und/oder der bestimmte charakteristische Wert (RXLEV, RXQUAL) über eine Datenverbindung übertragen werden.

8. Anordnung nach einem vorhergehenden Anspruch, bei der
die Meßeinrichtung (ME) zusätzlich das Frequenzband und/oder der Übertragungskanal, in denen das Signal übertragen wird, ermittelt und zu der Empfangseinrichtung (EE) sendet bzw. über die Funkschnittstelle zu der Funkstation (BS) überträgt.

9. Anordnung nach einem der Ansprüche 4 bis 8, die
für den Fall, daß die Antenneneinrichtung (A) mehrere Sektoren einer Funkzelle mit funktechnischen Ressourcen versorgt, für jeden Sektor jeweils eine Funktionprüfung durchführt.

10. Anordnung nach einem vorhergehenden Anspruch, bei der
die Auswerteeinrichtung (LC) eine Funktion der Verstärkungseinrichtung (VE) und/oder der Sendeeinrichtung (SE) überprüft.

11. Anordnung nach einem vorhergehenden Anspruch, wobei
in dem Funk-Kommunikationssystem als Teilnehmersepariertungsverfahren ein TDMA-, CDMA- oder TD/CDMA-Verfahren verwendet wird.

12. Anordnung nach einem vorhergehenden Anspruch, bei der
die Meßeinrichtung (ME) für den Fall, daß sie eine Fehlfunktion aufweist, eine Alarmmeldung zu der Auswerteeinrichtung (LC) überträgt und die Auswerteeinrichtung (LC) die Alarmmeldung auswertet.

13. Anordnung nach einem vorhergehenden Anspruch, bei der
die Meßeinrichtung (ME) eine Kennung (SIM) einer (mobilen) Funkstation aufweist.

14. Anordnung nach einem der Ansprüche 2 bis 13, bei der
in der Wartungs- und Administrationseinrichtung (OMC) eine Auswahl der Sendeeinrichtung (SE) und/oder Verstärkungseinrichtung (VE) vorgenommen wird, deren Funktion überprüft werden soll.

15. Anordnung nach dem vorhergehenden Anspruch, bei der
in der Wartungs- und Administrationseinrichtung (OMC) die Auswahl der zu überprüfenden Sendeeinrichtung (SE) und/oder Verstärkungseinrichtung (VE) aufgrund einer Zufallsauswahl erfolgt.

16. Anordnung nach einem der Ansprüche 14 oder 15, bei der
in der Wartungs- und Administrationseinrichtung (OMC) zusätzlich zu der Auswahl einer Sendeeinrichtung (SE) eine Auswahl einer Empfangseinrichtung (EE) erfolgt.
